# EUROPÄISCHE PATENTSCHRIFT

(11) **EP 2 583 857 B1**
(45) Veröffentlichungstag und Bekanntmachung des Hinweises auf die Patenterteilung: **01.03.2017**
(21) Anmeldenummer: 12006151.0
(22) Anmeldetag: 30.08.2012
(51) Int. Cl.: B60L 11/18, B61C 3/00, G01R 31/34

(54) **Stromtankstelle mit induktiver Übertragung elektrischer Energie**
Electricity charging point with inductive transmission of electrical energy
Station-service électrique avec transmission à induction d'énergie électrique

(30) Priorität: 22.10.2011 DE 102011116738
(43) Veröffentlichungstag der Anmeldung: 24.04.2013
(73) Patentinhaber: Langmatz GmbH, 82467 Garmisch-Partenkirchen (DE)
(72) Erfinder: Hunscher, Andreas, Dr., 82481 Riegsee (DE); Bauer, Hubert, 82467 Garmish-Partenkirchen (DE)
(74) Vertreter: Flosdorff, Jürgen

(56) Entgegenhaltungen:
- WO-A2-2011/006884
- DE-A1-102009 057 437
- NZ-A- 555 128
- US-A1- 2007 131 505
- US-A1- 2007 131 505
- US-A1- 2008 265 684

## Beschreibung

Die Erfindung betrifft eine Stromtankstelle mit induktiver Übertragung elektrischer Energie von einer primären Induktionsspule der Stromtankstelle zu einer sekundären Induktionsspule eines darüber stehenden Elektrofahrzeugs, mit einer mit der primären Induktionsspule verbundenen Ladetechnik.

Wenn ein Elektrofahrzeug über der primären Induktionsspule der Stromtankstelle anhält, ist seine Induktionsspule induktiv an die primäre Induktionsspule der Stromtankstelle ankoppelbar, so dass sein Energiespeicher berührungslos geladen werden kann. Dabei ist für das von der primären Induktionsspule erzeugte Magnetfeld ein relativ großer Luftspalt zu überwinden, wenn die primäre Induktionsspule in den Boden eingelassen ist. Der große Luftspalt hat einen beträchtlichen Energieverlust zur Folge.

Um dies zu vermeiden, ist bereits vorgeschlagen worden, dass Kraftfahrzeuge auf in den Boden eingelassenen, vertieften Radspuren über die im Boden angeordnete Induktionsspule der Stromtankstelle fahren, um den Zwischenraum zwischen den Induktionsspulen zu verringern. Dies ist mit beträchtlichen Kosten verbunden, und ungeübte oder unsichere Fahrern können Probleme damit haben, das Fahrzeug korrekt in der Radspur zu steuern.

Eine alternative Möglichkeit wäre über ein aus dem Boden heraus fahrbare Einrichtung (ähnlich den bekannten versenkbaren Straßenpollern) den Abstand zum Fahrzeugunterboden deutlich zu verringern. Dies ist aber mit beträchtlichen Kosten verbunden, die sich über den Betrieb nicht amortisieren lassen.

Auch könnte die Gefahr bestehen, bei einer nicht korrekten Positionierung Fahrzeuganbauteile beim Herausfahren zu zerstören.

Ähnlich wäre eine Verringerung des Luftspalts auch denkbar, wenn aus dem Fahrzeug heraus die Ladeeinrichtung nach der Positionierung abgesenkt würde. Diese Lösung ist aus den gleichen o.g. Gründen abzulehnen.

DE 10 2009 057437 A1 offenbart eine Anordnung zum induktiven Beladen eines Energiespeichers eines Fahrzeugs und eine Ladestation, die eine Bodeneinfassung in Form eines Gehäuseteils enthält, das nur aus vier Seitenwänden gebildet ist und keinen Boden aufweist. Das Gehäuseteil ist mit einem Deckel versehen, der eine Primärwicklung umfasst. Die zugehörige elektronische Schaltung ist in einer Haube angeordnet, die unter dem Deckel befestigt ist. Diese Ladestation ist in den Boden eingelassen, so dass ein relativ großer Luftspalt zwischen der primären Induktionsspule der Ladestation und der sekundären Induktionsspule eines darüber stehenden Elektrofahrzeugs zu überwinden ist.

Die US2007/0131505 A1 offenbart ein Ladesystem für Fahrzeuge, bei dem die primäre Induktionsspule entweder in einen über die Fahrbahn überstehenden, nicht von dem Fahrzeug überfahrbaren Block oder in eine mit schrägen Flanken versehene Schwelle eingebaut ist, die von dem Fahrzeug überfahrbar ist. Hierdurch ist der Luftspalt zwischen den beiden Induktionsspulen verringert, wenn das Fahrzeug mit seiner sekundären Induktionsspule direkt über der primären Induktionsspule steht. Der Fahrer kann aber nicht erkennen, an welcher Stelle der typischerweise langgestreckten Schwellen die primäre Induktionsspule eingebaut ist.

Die WO 2011/006884 A2 offenbart ein System zum induktiven Laden von Fahrzeugen, bei dem die Ladetechnik in einem Gehäuse angeordnet ist, das über dem Bodenniveau angeordnet ist und dessen Deckel die Form eines abgeschnittenen Kegels aufweist.

Der vorliegenden Erfindung liegt die Aufgabe zugrunde, eine bessere Lösung für das Problem anzugeben.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Ladetechnik der primären Induktionsspule in einem in den Boden eingelassenen Schacht angeordnet ist, der von einem vorzugsweise aus Kunststoff bestehenden Schachtdeckel abgedeckt ist. In dem Schacht ist die Ladetechnik, z.B. für Wartungs- und Reparaturarbeiten, gut zugänglich, wenn der Schachtdeckel hierzu abgenommen wird.

Weiter sieht die Erfindung vor, dass der Schachtdeckel entweder insgesamt oder in einem Bereich über das Bodenniveau hinaus ragt, und dass in diesen erhöhten Bereich die primäre Induktionsspule eingebettet ist. Der Schachtdeckel hat eine solche Breite, dass die Elektrofahrzeuge mit ihren Rädern beidseitig an dem Schachtdeckel vorbei fahren können, wenn sie zum Laden ihrer Batterie in die Position fahren, in der ihre Induktionsspule über der primären Induktionsspule angeordnet ist. Da die primäre Induktionsspule in den erhöhten Bereich des Schachtdeckels eingebaut ist und sich damit oberhalb des Bodenniveaus befindet, ist der Luftspalt zwischen den beiden Induktionsspulen erheblich reduziert. Die Höhe des Schachtdeckels über dem Bodenniveau ist natürlich so fest zu legen, dass der Schachtdeckel nicht mit dem Fahrzeugboden in Kontakt geraten kann. Hierbei ist ein Sicherheitsabstand einzuhalten, der zwischen der Oberkante des Schachtdeckels und dem (niedrigsten) Fahrzeugboden verbleibt.

Der erhöhte Bereich des Schachtdeckels hat erfindungsgemäß eine gewölbte Form, die im Bereich der eingebauten primären Induktionsspule abgeflacht sein kann.

Weiter sieht die Erfindung vor, dass die primäre Induktionsspule in einer Aussparung des Schachtdeckels angeordnet ist. Die Aussparung ist erfindungsgemäß durch eine zu öffnende Bodenwand geschlossen.

Zweckmäßigerweise besteht auch der Schacht aus Kunststoff. Der Schachtdeckel kann den Schacht so dicht verschließen, dass weder Wasser noch Schmutzpartikel in den Schacht eintreten können, und er erfüllt die weitere Aufgabe, die primäre Induktionsspule oberhalb des Bodenniveaus zu positionieren.

Verschließt der Schachtdeckel nicht wasserdicht den Schacht, so ist zumindest die Primärspule wasserdicht im Deckel untergebracht. Weitere Einrichtungen der Anschlusstechnik des Induktionssystems sind in dem Schacht entweder in separaten wasserdichten Gehäusen untergebracht oder befinden sich unter einer wasserdichten Taucherglocke. Der Schacht selbst ist dabei in den Boden eingelassen, so dass nur der Schachtdeckel oder ein Teil davon über dem Bodenniveau liegt.

Die Erfindung sieht eine kostengünstige Lösung für das Problem des Luftspalts zwischen den beiden Induktionsspulen vor. Der ohnehin zum Verschließen des Schachtes vorgesehene Schachtdeckel trägt die primäre Induktionsspule in einer solchen Höhe, dass der induktive Ladevorgang mit einem Minimum an Energieverlust vonstatten gehen kann.

Weitere Einzelheiten der Erfindung ergeben sich aus der folgenden Beschreibung sowie anhand der Zeichnungen. Dabei zeigen auf rein schematische Weise:
- Figur 1: einen in den Boden eingebauten Schacht mit gewölbtem Schachtdeckel und

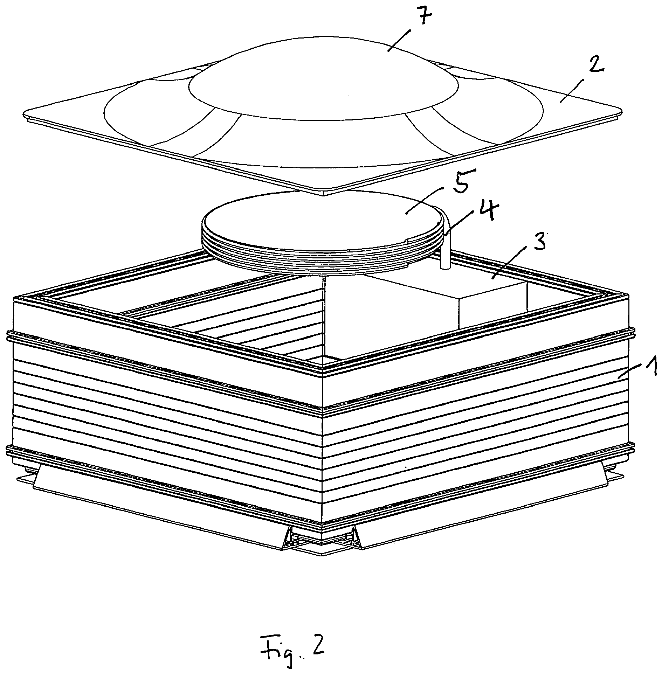

- Figur 2: die Anordnung gemäß Figur 1 in auseinander gezogener Darstellung.

Die Stromtankstelle enthält einen in den Boden eingebauten, aus Kunststoff hergestellten Schacht 1, der mit einem abnehmbaren Schachtdeckel 2 verschlossen ist, der vorzugsweise ebenfalls aus Kunststoff besteht.

In dem Schacht 1 befindet sich eine Ladetechnik 3, die über eine elektrische Leitung 4 mit einer primären Induktionsspule 5 verbunden ist, die in den Schachtdeckel 2 eingesetzt ist. Der hierzu vorgesehene Hohlraum in dem Schachtdeckel 2 kann mit einer Vergussmasse ausgefüllt oder durch eine zu öffnende Wand verschlossen sein, so dass die primäre Induktionsspule 5 zugänglich ist.

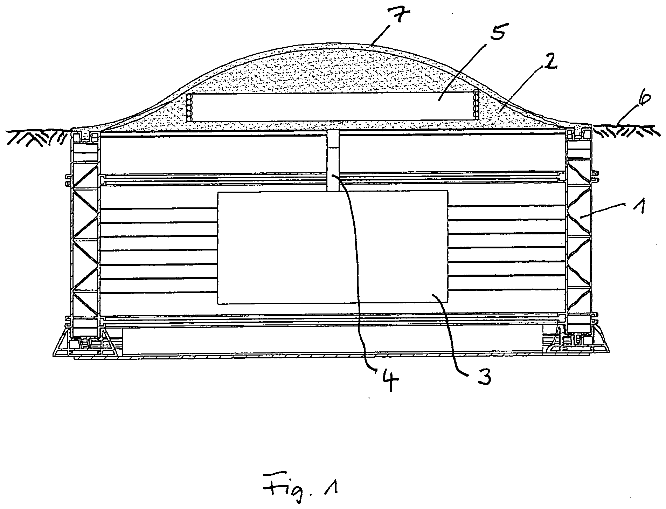

Der Schacht 1 ist bis zum dem in Figur 1 angedeuteten Niveau 6 in den Boden eingelassen. Der Schachtdeckel 2 ist nach oben gewölbt, und zwar in Form einer nach außen flach auslaufenden Kugelkalotte 7. Der Schachtdeckel 2 positioniert die primäre Induktionsspule 5 oberhalb des Bodenniveaus 6, um den Luftspalt zwischen der primären Induktionsspule 5 und einer (nicht dargestellten) sekundären Induktionsspule eines Elektrofahrzeugs zu verringern. Der nach oben gewölbte Schachtdeckel zeigt für den Fahrer eines Elektrofahrzeugs gut erkennbar die Position der primären Induktionsspule an und hält mit größter Wahrscheinlichkeit davon ab, den Deckel mit den Rädern eines Fahrzeugs zu überfahren. Sollte dies dennoch versehentlich geschehen, sorgt die gewölbte Form des Schachtdeckels für eine erhöhte Stabilität.

Der Schacht 1 ist erheblich schmaler als die geringste Spurbreite der aufzuladenden Elektrofahrzeuge, die beidseitig an dem Schacht 1 vorbei fahren. Es wird betont, dass die Erfindung nicht auf die beschriebenen und dargestellten Ausführungsformen sonder durch die Ansprüche beschränkt ist. Es sind alle offenbarten Merkmale der Ausführungsformen auch einzeln untereinander anders als oben beschrieben miteinander kombinierbar.

## Patentansprüche

1. Stromtankstelle mit induktiver Übertragung elektrischer Energie von einer primären Induktionsspule der Stromtankstelle zu einer sekundären Induktionsspule eines Elektrofahrzeugs, mit einer mit der primären Induktionsspule verbundenen Ladetechnik, wobei die Ladetechnik in einem in den Boden eingelassenen Gehäuse angeordnet ist, das von einem Deckel (2) abgedeckt ist, der einen über dem Bodenniveau (6) liegenden erhöhten Bereich (7) aufweist,
**dadurch gekennzeichnet,**
**dass** der erhöhte Bereich (7) des Deckels (2) eine nach oben gewölbte Form hat, die einer Kugelkalotte gleicht, der Form dass das Elektrofahrzeug mit seinen Rädern beidseitig am Deckel (2) vorbeifahren kann, und
**dass** die primäre Induktionsspule (5) in einer Aussparung in dem erhöhten Bereich (7) des Deckels (2) angeordnet ist, die durch eine zu öffnende Bodenwand geschlossen ist.

2. Stromtankstelle nach Anspruch 1,
**dadurch gekennzeichnet,**
**dass** die Kugelkalotte nach außen flach ausläuft.

3. Stromtankstelle nach einem Ansprüche 1 bis 2,
**dadurch gekennzeichnet,**
**dass** der Deckel aus Kunststoff besteht.

## Claims

1. An electricity charging point with inductive transmission of electrical energy from a primary induction coil of the charging point to a secondary induction coil of an electric vehicle including a charging system connected to the primary induction coil, wherein the charging system is arranged in a housing set into the ground, which is covered by a cover (2), which has a raised region (7) situated above the ground level (6), **characterised in that** the raised region (7) of the cover (2) has an upwardly domed shape, which resembles a spherical ball of the shape that the electrical vehicle can drive past with its wheels on both sides of the cover (2) and that the primary induction coil (5) is arranged in a cavity in the raised region (7) of the cover (2), which is closed by a bottom wall, which may be opened.

2. An electricity charging point as claimed in Claim 1, **characterised in that** the spherical ball terminates flat in the outward direction.

3. An electricity charging point as claimed in one of Claims 1 to 2, **characterised in that** the cover consists of plastic material.

## Revendications

1. Station de recharge électrique avec une transmission par induction d'énergie électrique depuis une bobine à induction primaire de la station de recharge à une bobine à induction secondaire d'un véhicule électrique, avec un équipement technique de recharge relié à la bobine à induction primaire, dans laquelle l'équipement technique de recharge est disposé dans un boîtier enfoncé dans le sol, lequel est recouvert d'un couvercle (2), qui présente une zone (7) surélevée située au-dessus du niveau du sol (6),
**caractérisée en ce**
**que** la zone (7) surélevée du couvercle (2) a une forme bombée vers le haut, qui ressemble à une calotte sphérique de telle forme que le véhicule électrique peut passer le long du couvercle (2) de part et d'autre avec ses roues, et
**que** la bobine à induction (5) primaire est disposée dans un évidement dans la zone (7) surélevée du couvercle (2), lequel évidement est fermé par une paroi de sol à ouvrir.

2. Station de recharge électrique selon la revendication 1,
**caractérisée en ce**
**que** la calotte sphérique se prolonge à plat vers l'extérieur.

3. Station de recharge électrique selon l'une quelconque des revendications 1 à 2,
**caractérisée en ce**
**que** le couvercle est constitué d'une matière plastique.
